# EUROPÄISCHE PATENTANMELDUNG

(11) **EP 2 444 193 A1**
(43) Veröffentlichungstag der Anmeldung: **25.04.2012**
(21) Anmeldenummer: 10188198.5
(22) Anmeldetag: 20.10.2010
(51) Int. Cl.: B23K 26/03, B23K 26/04, B23K 26/38, B23K 26/14

(54) **Laserbearbeitungskopf mit einem äusseren Isolationsteil und einem inneren Isolationsteil aus Metall**

(71) Anmelder: Bystronic Laser AG, 3362 Niederönz (CH)
(72) Erfinder: Broger, David, 3400 Burgdorf (CH)
(74) Vertreter: Patentbüro Paul Rosenich AG

(57) **Zusammenfassung**

Die Erfindung betrifft einen Laserbearbeitungskopf für eine Laserbearbeitungsmaschine umfassend eine Aufnahme (2) für einen aus elektrisch leitendem Material gebildeten Sensorteil (3), einen äußeren Isolationsteil (4) aus elektrisch isolierendem Material, vorzugsweise aus Kunststoff, zur elektrischen Abschirmung und einen innerhalb des äußeren Isolationsteils (4) eingesetzten inneren Isolationsteil (5) als Strahlungsschild, wobei der innere Isolationsteil (5) aus Metall gebildet ist und vom Sensorteil (3) elektrisch isoliert ist.

## Beschreibung

Die Erfindung bezieht sich auf einen Laserbearbeitungskopf für eine Laserbearbeitungsmaschine, umfassend eine Aufnahme für einen aus elektrisch leitendem Material gebildeten Sensorteil, einen äußeren Isolationsteil aus elektrisch isolierendem Material, vorzugsweise aus Kunststoff, zur elektrischen Abschirmung und einen innerhalb des äußeren Isolationsteils eingesetzten inneren Isolationsteil als Strahlungsschild.

Aufgrund der hohen Leistungsdichte bei Laserbearbeitungsmaschinen werden gleichzeitig mehrere Anforderungen an einen Laserbearbeitungskopf gestellt.

Das Innere eines Laserbearbeitungskopfes ist während des Laserschneidens einer kontinuierlich hohen Strahlenbelastung ausgesetzt und muss dementsprechend geschützt werden. Zur Messung des Abstandes zwischen Laserbearbeitungsdüse und dem zu bearbeitenden Werkstück muss ein Sensormechanismus vorgesehen sein, der auch bei extremen Bedingungen zuverlässig arbeitet. Üblicherweise erfolgt die Abstandsmessung kapazitiv, d.h. es wird die durch den Laserbearbeitungskopf bzw. den Sensorteil und durch das Werkstück gebildete Kapazität bestimmt. Dies erfolgt üblicherweise über eine Frequenzmessung des entstehenden Schwingkreises. Um keine verfälschten Ergebnisse zu erhalten, muss der Laserbearbeitungskopf nach außen hin elektrisch isoliert sein.

Heute werden i.A. Keramikteile zur elektr. Isolation der Schneiddüse vom Rest des Schneidkopfs und der Maschine verwendet. Da Keramik leicht bricht, bietet sich Kunststoff als Alternative an.

Der nächstliegende Stand der Technik ist die WO 2007 073 745 A1 und offenbart eine Sensoranordnung für eine Laserbearbeitungsmaschine. Zur oben angesprochenen elektrischen Isolierung schlägt diese Druckschrift vor, die äußere Ummantelung des Laserbearbeitungskopfes aus Kunststoff herzustellen, also einem nichtleitenden Material.

Ohne weitere Maßnahme wären allerdings das Innere der Ummantelung bzw. die Wände des Laserganges ständig der intensiven Laserstrahlung ausgesetzt. Da Kunststoff nicht genügend Resistenz gegenüber Strahlung aufweist, bewirken Strahlenschäden ein schnelles Altern des Kunststoffes und erfordern einen ständigen Austausch des Laserbearbeitungskopfes, was sowohl kosten- als auch wartungsintensiv ist.

Zur Umgehung dieses Problems schlägt die WO 2007 073 745 A1 vor, eine innere Abschirmung bzw. einen zusätzlichen inneren Isolationsteil aus einem nicht leitenden, wärmebeständigen Werkstoff zum Schutz gegen Laserstrahlung und/oder Wärme zu verwenden. Dieser innere Isolationsteil ist in Form eines Rohrabschnittes in den äußeren Isolationsteil aus Kunststoff eingesetzt. Als geeignete Materialien werden Quarzglas und Keramik angegeben.

Der äussere Isolationsteil aus Kunststoff dient zur elektrischen Abschirmung und das innere Abschirmungsteil aus elektrisch nicht leitendem wärmebeständigen Werkstoff dient zur Abschirmung gegen Laserstrahlung und/oder Wärme.

Allerdings sind die verwendeten Werkstoffe sowohl hinsichtlich ihrer Strahlenbeständigkeit als auch ihrer mechanischen Eigenschaften nicht optimal. Die ständigen hohen Temperaturdifferenzen zwischen ein- und ausgeschaltetem Zustand bewirken, dass diese Materialien ermüden, Sprünge bekommen oder ganz brechen. Dadurch wird wiederum ein vorzeitiger Austausch unumgänglich.

Die Erfindung setzt sich nun zum Ziel, diese Nachteile zu beseitigen und einen Laserbearbeitungskopf zur Verfügung zu stellen, der einerseits strahlenresistent ist und andererseits genaue und zuverlässige Abstandsmessungen zwischen Werkstück und Laserbearbeitungsdüse ermöglicht. Der Laserbearbeitungskopf soll daher folgende Eigenschaften in sich vereinen: Langlebigkeit durch eine effiziente Abschirmung gegenüber Strahlung und eine zuverlässige und störungsfreie Messung des Werkstück-Abstandes. Darüber hinaus soll der Laserbearbeitungskopf wartungsfrei, kostengünstig und einfach zum fertigen sein.

Diese Ziele werden mit einem Laserbearbeitungskopf der eingangs genannten Art dadurch erreicht, dass der innere Isolationsteil aus Metall gebildet ist und vom Sensorteil elektrisch isoliert ist.

Das Verwenden eines Metalls als innere Abschirmung gegenüber der Laserstrahlung gewährleistet einen zuverlässigen Schutz des äußeren Isolationsteils vor schädlicher Strahleneinwirkung. Gleichzeitig wird die im Laserbearbeitungskopf umgesetzte Wärme aufgrund der ausgezeichneten thermischen Leitfähigkeit von Metallen effizient und gleichförmig verteilt, sodass temperaturbedingte Spannungen im Laserbearbeitungskopf stark vermindert werden können.

Durch die elektrische Trennung des metallischen inneren Isolationsteiles vom Sensorteil wird die Messung des Werkstück-Abstandes über die Bestimmung der Kapazität nicht negativ beeinflusst. Die Isolation des Gesamtteils bleibt allerdings erhalten, weil das metallische Abschirmungsteil so positioniert wird, dass kein elektrischer Kontakt mit der Sensorhalterung entsteht. Die isolierende Wirkung des äußeren Kunststoffteils wird somit nicht beeinträchtigt.

Durch die erfindungsgemäße Maßnahme kann der Laserbearbeitungskopf wesentlich günstiger gefertigt werden, zumal eine Metallhülse, z.B. aus Messing, wesentlich billiger ist als eine Keramik oder ein Quarzglas. Im Gegensatz zu letzteren Werkstoffen ist Metall mechanisch robust, sodass auch während des Fertigungsprozesses keine besonderen Sicherheitsvorkehrungen getroffen werden müssen.

Weitere Ausbildungen der Erfindung sind in den Figuren und in den abhängigen Patentansprüchen angegeben.

Die Bezugszeichenliste ist Bestandteil der Offenbarung.

Anhand von Figuren wird die Erfindung symbolisch und beispielhaft näher erläutert. Die Figuren werden zusammenhängend und übergreifend beschrieben. Gleiche Bezugszeichen bedeuten gleiche Bauteile, Bezugszeichen mit unterschiedlichen Indizes geben funktionsgleiche oder ähnliche Bauteile an.

Es zeigen dabei
Fig.1 - einen Isolationsabschnitt eines erfindungsgemäßen Laserbearbeitungskopfs,
Fig. 2 - einen Laserbearbeitungskopf mit Laserbearbeitungskopfoberteil und befestigtem Isolationsabschnitt mit Schneiddüse,
Fig. 3 - eine Laserbearbeitungsmaschine.

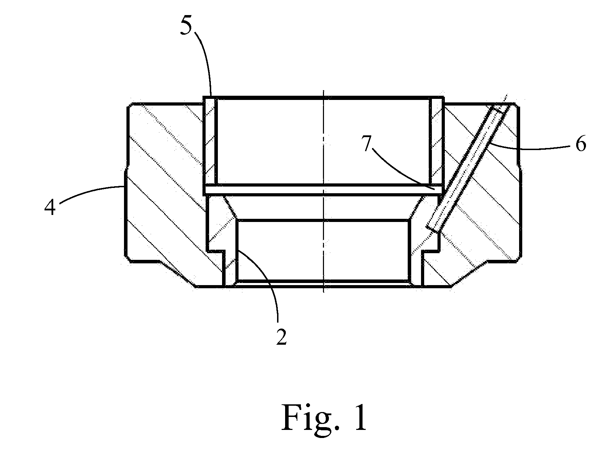

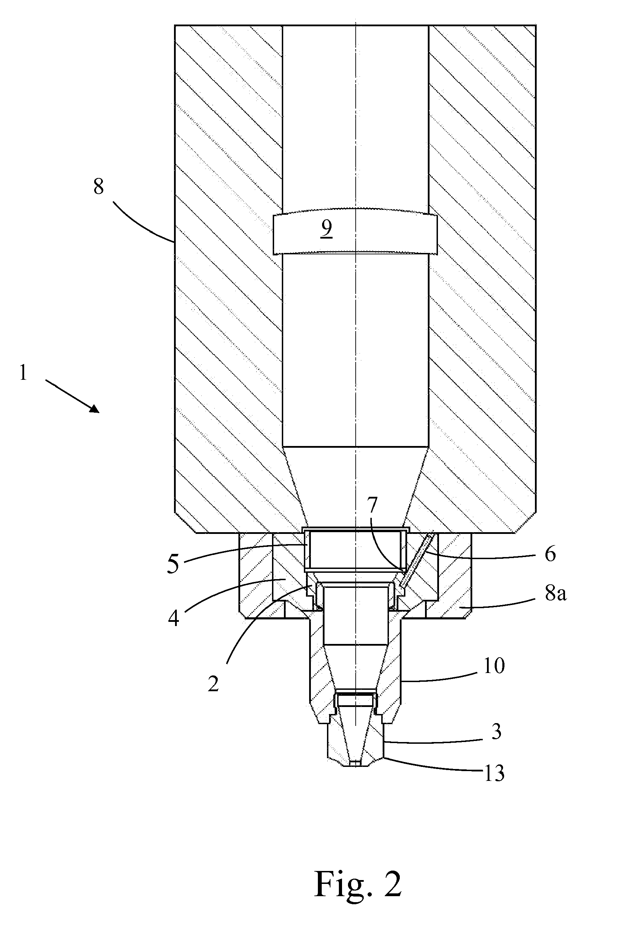

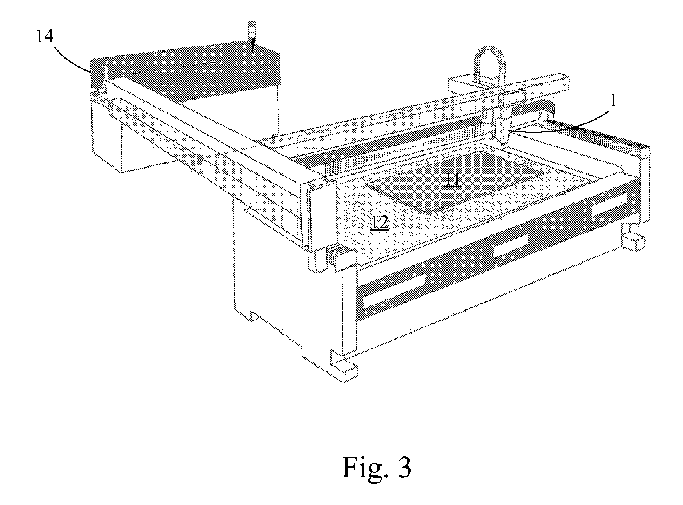

Fig. 1 zeigt einen erfindungsgemässen Isolationsabschnitt eines Laserbearbeitungskopfs 1 zur Verwendung in einer Laserbearbeitungsmaschine (in Fig. 3 ersichtlich). Der aus einem äusseren Isolationsteil 4 und einem inneren Isolationsteil 5 bestehende Isolationsabschnitt des Laserbearbeitungskopfs 1 hält eine Aufnahme 2 für einen Sensorteil 3. Vorzugsweise bildet der Sensorteil 3 zusammen mit der Laserbearbeitungsdüse 13 (in Fig. 2 ersichtlich) einen einzigen gemeinsamen Bauteil. In diesem Fall ist die Laserbearbeitungsdüse 13 ebenfalls aus Metall ausgebildet und die Aufnahme 2 bildet eine Art Metallinterface zwischen einem Kontaktstift 6 und dem Sensorteil 3. Die Aufnahme 2 befindet sich innerhalb eines äußeren Isolationsteiles 4 mit zylindrischer oder konischer Innenbohrung und wird von diesem gehalten. Der Bauteil, der den Sensorteil 3 und die Laserbearbeitungsdüse 13 in sich vereint, wird durch die Aufnahme 2 gehalten, im dargestellten Ausführungsbeispiel unter Einfügung eines leitenden Zwischenstückes 10. Die Aufnahme 2 ist somit auch im Sinne von "Halterung" zu verstehen. Das Befestigen der Laserbearbeitungsdüse 13 bzw. des Sensorteils 3 an der Aufnahme 2 kann nämlich auch über Einfügung von ein oder mehreren Zwischenstücken 10 erfolgen.

Im Betriebszustand bildet der Sensorteil 3 einen Pol einer Kapazität, deren zweiter Pol das zu bearbeitende Werkstück 11 (in Fig. 3 ersichtlich) ist. Die Bestimmung der Kapazität an sich ist im Stand der Technik bekannt und wird z.B. in der WO 2007 073 745 A1 beschrieben, deren Offenbarung durch Bezugnahme in diese Beschreibung aufgenommen wird.

Ein Kontaktstift 6 durchsetzt schräg von der Seite den äußeren Isolationsteil 4 und ist in elektrischem Kontakt mit der Aufnahme 2, die wiederum in elektrischem Kontakt mit dem Düse/Sensorteil-Bauteil 3, 13 steht. Der Kontaktstift 6 dient somit der Kontaktierung des Sensorteils 3 zur Bildung einer Kapazität, deren Größe vom Werkstück-Abstand abhängig ist.

Im oberen Bereich des Isolationsabschnittes des Laserbearbeitungskopfes 1 ist im äußeren Isolationsteil 4 ein innerer Isolationsteil 5 in Form einer Hülse aus einem metallischen Werkstoff eingesetzt. Der vom inneren Isolationsteil 5 umschlossene Raum ist der Lasergang. Der innere Isolationsteil 5 ist gegenüber dem Sensorteil 3 elektrisch isoliert. Im dargestellten Ausführungsbeispiel ist zu diesem Zweck ein Luftspalt 7 zwischen dem inneren Isolationteil 5 und der Aufnahme 2 für die Laserbearbeitungsdüse bzw. den Sensorteil 3 vorgesehen.

Alternativ kann auch ein vom äußeren Isolationsteil 4 nach innen ragender ringförmiger Steg den inneren Isolationsteil 5 von der elektrisch leitenden Aufnahme 2 beabstanden oder ein zusätzlicher nicht-leitender Ring eingesetzt werden.

Der Laserbearbeitungskopf 1, insbesondere der äußere und der innere Isolationsteil 4, 5 und der Lasergang sind zumindest abschnittsweise zylindrisch oder konisch ausgebildet. Der innere Isolationsteil 5 kann daher als einfache Metallhülse ausgebildet sein. Bei alternativen Bauformen kann die Hülse auch konisch, tailliert, usw. ausgebildet sein.

Der metallische innere Isolationsteil 5 kann in den äußeren Isolationsteil 4 eingepresst, eingeklebt oder eingegossen werden, so dass eine feste mechanische Verbindung vorliegt. Besonders bevorzugte Metalle für den inneren Isolationsteil 5 sind Messing, Aluminium, Kupfer und Edelstahl.

Fig. 2 zeigt den Laserbearbeitungskopf 1 mit eingesteckter oder eingeschraubter Laserbearbeitungsdüse 13. Der aus den Isolationsteilen 4 und 5 gebildete Isolationsabschnitt ist mit einem Laserbearbeitungskopfoberteil 8 lösbar verbunden. Dazu ist als Bindeglied ein Anschlussteil 8a vorgesehen. Der Laserbearbeitungskopfoberteil 8 und der Anschlussteil 8a können z.B. aus Metall sein. Wie der Fig. 2 zu entnehmen ist, ergibt sich aufgrund des äußeren Isolationsteils 4 eine elektrische Isolation des Anschlussteils 8a zur Aufnahme 2, zum Zwischenstück 10 bzw. zum Sensorteil 3 hin.

Der in Fig. 1 dargestellte Isolationsabschnitt ist zwischen dem Laserbearbeitungskopfoberteil 8 und der Aufnahme 2 angeordnet (Fig. 2) und verbindet diese beiden Bauteile. Die Funktion des Isolationsabschnittes liegt in der elektrischen Isolierung des Sensorteils 3 vom Rest des Laserbearbeitungskopfes 1, im dargestellten Beispiel vom Laserbearbeitungskopfoberteil 8. Diese Funktion wird durch den äußeren Isolationsteil 4 erreicht. Der innere Isolationsteil 5 schützt als Strahlungsisolation den äußeren Isolationsteil 4 vor Strahlung und Wärme.

Eine Laserstrahlformungsoptik 9 im Inneren des Laserbearbeitungskopfoberteils 8 sorgt für eine entsprechende Anpassung des Laserstrahls an die Werkstück-Erfordernisse.

Fig. 3 zeigt eine Laserbearbeitungsmaschine mit einer Werkstückauflage 12 und darauf einem zu bearbeitenden Werkstück 11. Das Werkstück 11 bildet mit dem Sensorteil 3 an der Spitze des Laserbearbeitungskopfes 1 eine Kapazität, die mittels einer Steuer-/Auswertevorrichtung 14 gemessen wird.

### Bezugszeichenliste

| | |
|---|---|
| 1 - | Laserbearbeitungskopf |
| 2 - | Aufnahme für den Sensorteil |
| 3 - | Sensorteil |
| 4 - | äußerer Isolationsteil |
| 5 - | innerer Isolationsteil |
| 6 - | Kontaktstift |
| 7 - | Luftspalt |
| 8 - | Laserbearbeitungskopfoberteil |
| 8a - | Anschlussteil |
| 9 - | Laserstrahlformungsoptik |
| 10 - | Zwischenstück |
| 11 - | Werkstück |
| 12 - | Werkstückauflage |
| 13 - | Laserbearbeitungsdüse |
| 14 - | Steuer-/Auswertevorrichtung |

## Patentansprüche

1. Laserbearbeitungskopf (1) für eine Laserbearbeitungsmaschine umfassend eine Aufnahme (2) für einen aus elektrisch leitendem Material gebildeten Sensorteil (3), einen äußeren Isolationsteil (4) aus elektrisch isolierendem Material, vorzugsweise aus Kunststoff, zur elektrischen Abschirmung und einen innerhalb des äußeren Isolationsteils (4) eingesetzten inneren Isolationsteil (5) als Strahlungsschild, **dadurch gekennzeichnet, dass** der innere Isolationsteil (5) aus Metall gebildet ist und vom Sensorteil (3) elektrisch isoliert ist.

2. Laserbearbeitungskopf nach Anspruch 1, **dadurch gekennzeichnet, dass** der innere Isolationsteil (5) in Form einer Hülse ausgebildet ist, die vorzugsweise zylindrisch oder konisch ausgebildet ist.

3. Laserbearbeitungskopf nach einem der vorhergehenden Ansprüche, **dadurch gekennzeichnet, dass** die Aufnahme (2) für den Sensorteil (3) elektrisch leitend ist.

4. Laserbearbeitungskopf nach einem der vorhergehenden Ansprüche, **dadurch gekennzeichnet, dass** zur elektrischen Isolation zwischen dem inneren Isolationsteil (5) und dem Sensorteil (3) ein ringförmiger Luftspalt zwischen dem inneren Isolationsteil (5) und der Aufnahme (2) für den Sensorteil (3) ausgebildet ist.

5. Laserbearbeitungskopf nach einem der vorhergehenden Ansprüche, **dadurch gekennzeichnet, dass** zur elektrischen Isolation zwischen dem inneren Isolationsteil (5) und dem Sensorteil (3) ein vom äußeren Isolationsteil (4) nach innen ragender ringförmiger Steg zwischen Isolationsteil (5) und der Aufnahme (2) für den Sensorteil (3) vorgesehen ist.

6. Laserbearbeitungskopf nach einem der vorhergehenden Ansprüche, **dadurch gekennzeichnet, dass** der innere Isolationsteil (5) von allen übrigen elektrisch leitenden Teilen des Laserbearbeitungskopfes (1) elektrisch isoliert ist.

7. Laserbearbeitungskopf nach einem der vorhergehenden Ansprüche, **dadurch gekennzeichnet, dass** eine Laserbearbeitungsdüse (13) und der Sensorteil (3) in einem Bauteil integriert sind.

8. Laserbearbeitungskopf nach einem der vorhergehenden Ansprüche, **dadurch gekennzeichnet, dass** der Sensorteil (3) über mindestens ein Zwischenstück (10) mit der Aufnahme (2) verbunden ist.

9. Laserbearbeitungskopf nach einem der vorhergehenden Ansprüche, **dadurch gekennzeichnet, dass** der Laserbearbeitungskopf (1) einen Laserbearbeitungskopfoberteil (8) aufweist, wobei die Isolationsteile (4, 5) als Isolationsabschnitt zwischen dem Laserbearbeitungskopfoberteil (8) und der Aufnahme (2) angeordnet sind.

10. Laserbearbeitungsmaschine mit einem Laserbearbeitungskopf, **dadurch gekennzeichnet, dass** der Laserbearbeitungskopf nach einem der vorhergehenden Ansprüche ausgebildet ist.
